**Europäisches Patentamt**

**European Patent Office**

**Office européen des brevets**

(19)

(11) Publication number : **0 004 161**
**B1**

(12) 

# EUROPEAN PATENT SPECIFICATION

(45) Date of publication of patent specification :
**11.02.81**

(51) Int. Cl.³ : **A 22 C 11/02, A 22 C 13/00**

(21) Application number : **79300310.4**

(22) Date of filing : **01.03.79**

(54) **Method of packaging by use of a shirred stick of tubular film casing material and method of forming said shirred stick.**

(30) Priority : **14.03.78 CA 298880**

(43) Date of publication of application :
**19.09.79 (Bulletin 79/19)**

(45) Publication of the grant of the patent :
**11.02.81 Bulletin 81/06**

(84) Designated contracting states :
**BE DE FR GB SE**

(56) References cited :
**FR - A - 2 173 429**
**FR - A - 2 336 316**
**GB - A - 1 329 399**
**US - A - 3 545 038**

(73) Proprietor : **C.I.L. Inc.**
**P.O. Box 10**
**Montreal Quebec H3C 2R3 (CA)**

(72) Inventor : **Marz, Horst Fitz**
**27 Vanier Crescent**
**Otterburn Park Quebec (CA)**

(74) Representative : **Reid, Thomas James et al**
**Imperial Chemical Industries Limited Legal Department: Patents Thames House North Millbank**
**London SW1P 4QG (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Imprimerie Jouve, 17, rue du Louvre, 75001 Paris, France

EP 0 004 161 B1

## Method of packaging by use of ashirred stick of tubular film casing material and method of forming said shirred stick

This invention relates to a method of making a shirred stick of tubular film casing material of the type used to encase foodstuffs and other flowable or compressible material. In particular, the invention relates to making an improved shirred stick of tubular film casing which may be more conveniently and more cleanly filled by means of an extrusion packing machine than has been possible heretobefore. The invention also includes a method of packaging flowable material into a shirred stick of tubular casing material.

In the packaging of food products, such as varieties of sausage meat or processed cheese or non-food products such as explosives and caulking compounds and the like in thin-walled synthetic or natural tubular casings, great care is required to reduce or prevent the backflow of the product towards the stored shirred casing and to prevent leakage of the product to the outside. Additional care is also required to limit the entry of air into the casing along with the product being encased since in many instances the presence of air may be detrimental especially in food packaging. Preventive measures designed to guard against product leakage and air ingress include, for example, the use of tight-fitting spring-loaded « donut » seals through which the tubular casing drawn from the stick is threaded near the point of filling. These seals, however, require constant attention to maintain operability and, as well, tend to exert excessive friction and drag on the film as it is drawn therethrough. This drag limits the ability of a packing machine operator to produce a soft-packed or slack-packed product, which type of package is often required for meat products which may subsequently swell upon cooking. Another commonly used antileakage and air-proofing technique employs a flexible cup seal which contacts and wipes the inner casing wall as the casing is advanced during filling. Such a cup seal, which is pressed against the casing wall by the pressure of the contacting extruded filling product, interferes with packing control due to the variability of the pressures and the braking action exerted by the seal upon the casing.

French Patent No. 2, 336, 316 (US Patent No. 4, 007, 761) describes a shirred stick wherein a tube-shaped shirred casing material is shown to have an internal lining and an external overwrap. When filled with an extrudate, the shirred tubing is pulled from the rear of the stick ant thence through the hollow core of the tube-shaped stick. This stick and its method of filling is subject to loss of product since the pressure of the extrudate can force the extrudate between the casing and the filling horn or spout. French Patent No. 2, 173, 429 describes an overlayed (but unshirred) tubular casing material mounted upon a hollow tube or bobbin but without any internal lining on the inside of the overlayed portion.

The present invention eliminates the need for any spring activated or pressure seals or other similar devices to prevent product leakage or air ingress.

In accordance with the present invention flowable material is packaged in tubular film casing material by a method which comprises placing around the filling means of a filling apparatus a shirred stick of said casing material having a tubular bore therethrough, said bore being lined with an integral unshirred extended end-length portion of the said tubular casing, connecting the leading end of said bore-lining un-shirred casing portion in leakproof manner in contact with and surrounding said filling means, gathering and sealing the forward end of the shirred stick and feeding the flowable material through said filling means into said casing material whereby the shirred casing material is progressively deshirred and drawn from the shirred stick over the point of leakproof connection of said bore-lining casing portion with said filling means. The invention also includes a method of forming a shirred stick of tubular film wherein one end of a length of tubular film is secured to one end of a cylindrical former, said film is sleeved externally over said former and said film is progressively shirred from the other end of said former whereby a hollow shirred stick of tubular film is formed around an unshirred portion of film, which film portion lines the bore of said stick. The former may advantageously be a pipe to one end of which lay-flat tubular film is secured by means of a perforated plug inserted in the pipe end and compressed air is fed through the plug into the lay-flat tubing to facilitate the sleeving and shirring operation.

Fig. 1 is a side section view of a conventional prior art shirred stick mounted on a packing machine filling horn during packaging operations ;

Fig. 2 is a side section view of a shirred stick according to the present invention mounted on a filling horn during packaging operations ;

Fig. 3 is a side section view of a shirred stick according to the present invention supported on an internal hollow bobbin, and

Figs. 4a, 4b, 4c and 4d show in diagrammatic form a sequence of steps which may be employed in the preparation of a shirred stick according to the present invention.

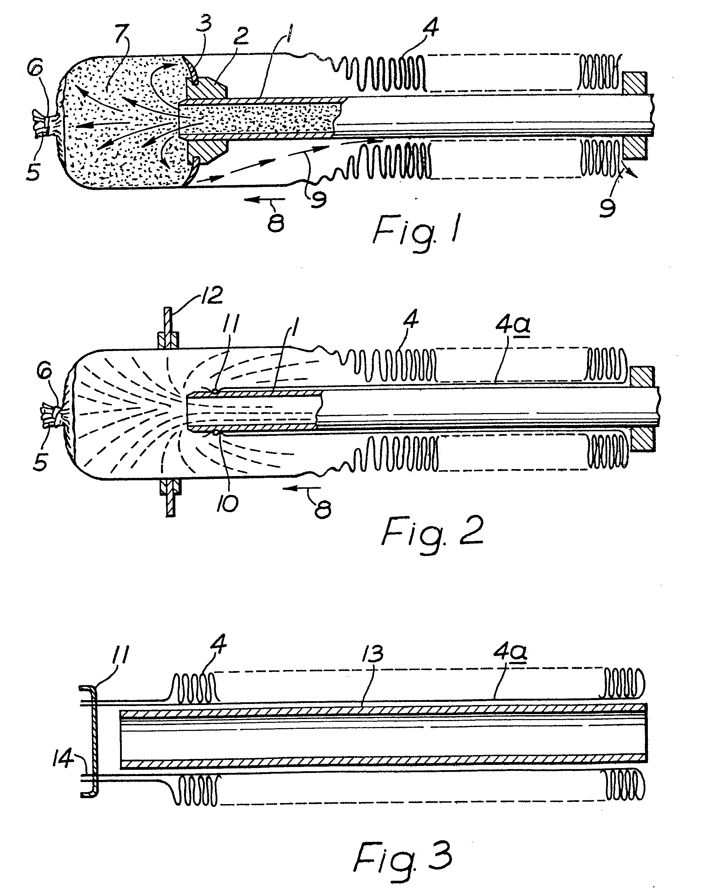

Referring to Fig. 1 there is shown a filling horn 1 of an extrusion packaging machine (not shown). Mounted near the open end of horn 1 is a seal holder 2 having attached thereto a circular, flexible seal ring 3. Shirred tubular casing material 4 is shown mounted on horn 1. The forward end 5 of casing 4 is shown gathered and sealed by, for example, a metal clip 6. Casing filling product, for example, sausage meat 7, is shown being extruded under pressure from horn 1 into the closed forward end of casing 4. As extrusion of product 7 continues, succeeding sections of casing 4 are deshirred and are drawn in the direction shown by the arrow 8 to form a long continuous sausage. The sausage is gathered and clipped at appropriate intervals (not shown) to provide separate sausage links. During the filling operation, the tendency of filling material 7 to flow backwards into the shirred portion of casing 4, and thence to the outside as indicated by arrows 9, is reduced by the sealing action of seal ring 3 against the inner wall of casing 4. For effective sealing against loss of product, very tight contact is required between ring 3 and casing 4 which tight contact tends to produce a high level of drag acting against the advance of casing 4. This, in turn, requires the employment of high product extrusion pressures which tends to develop an unduly hard-packed an overfilled package.

Referring to Fig. 2, where like numerals are used, there is shown a filling horn 1 of an extrusion packaging machine (not shown). Close to and cut into the forward open end of horn 1 is a circumferential depression or groove 10 having in tight-fitting contact therewith a resilient O-shaped retaining ring 11. Shirred tubular casing material 4 is shown mounted on horn 1. An unshirred end portion 4a of casing 4 is passed through the bore of casing 4 and tightly secured between groove 10 and retaining ring 11. The forward end 5 of casing 4 is shown gathered and sealed by a metal clip 6. Casing filling product such as sausage meat 7, is shown being extruded from horn 1 into the closed forward end of casing 4. As product extrusion proceeds, succeeding lengths of casing 4 are deshirred and advance in the direction shown by arrow 8. The thus formed sausage may be gathered, clipped and cut at appropriate intervals to provide separate sausage or package portions. An external adjustable friction drag component 12 is shown in contact with the outer surface of the filled section of casing 4. During the operation of filling casing 4 as depicted in Fig. 2, the back flow of product into the shirred portion of the casing is prevented from reaching the outside by virtue of the tight seal provided by the bore-lining length 4a of casing 4 at ring 11 and groove 10. Similarly, ingress of air into the product is prevented by the same sealing arrangement. Adjustment of the density or firmness of the filled casing can be made by drag component 12 and is thus independent of the filling pressure through horn 1.

Referring to Fig. 3 there is shown a shirred casing 4 similar to that of Fig. 2 except that the casing is supported on a hollow bobbin 13 rather than directly on the filling horn of an extrusion packing machine. Unshirred end length 4a of casing 4 is shown passed between bobbin 13 and shirred casing 4 and is secured by a wire or clip 11 against deshirring during transportation and handling. Bobbin 13, which may be of plastic, metal or stiffened cardboard, is adapted to fit over the filling horn of a packaging machine where the end 14 of unshirred length 4a can be secured to the filling horn as shown in Fig. 2.

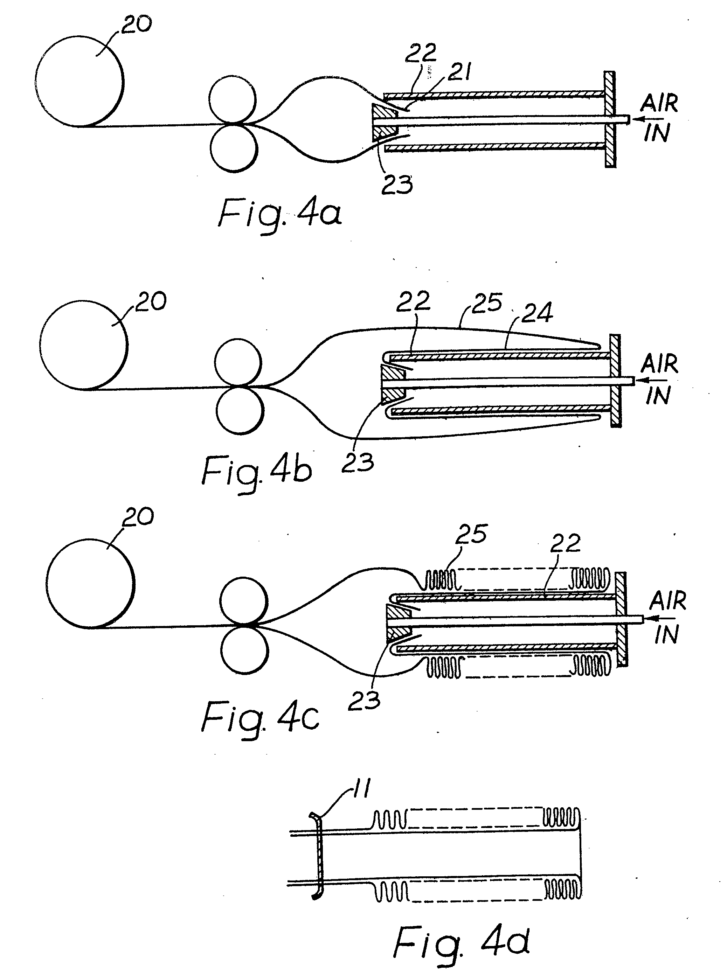

Referring to Figs. 4a, 4b, 4c and 4d there is shown a roll of lay-flat tubing 20 of natural or synthetic film. The open end 21 of tubing 20 is secured in the end of a pipe 22 by means of a perforated plug 23 as shown in Fig. 4a. To aid in the back folding and shirring operation, low pressure air is injected in the direction of the arrow through pipe 22 and the perforation in plug 23 to inflate the layflat tubing 20. Fig. 4b shows film section 24 of film 20 folded over pipe 22 and then back-folded as section 25. Fig. 4c shows film section 25 shirred over film section 24. Fig. 4d shows the completed shirred stick withdrawn from pipe 22 and with plug 23 removed. Deshirring is prevented by a wire tie or clip 11. If desired, the shirred stick may be further protected against deshirring or contamination by means of a sheathing material as disclosed in United States Patent No. 4, 033, 382.

Typical of the film material which may be used in the improved shirred stick of the invention include, for example, synthetic film forming material such as polyethylene, polypropylene, polyester, acrylic or vinyl chloride polymers and natural proteinaceous film such as edible collagen.

As can be seen the improved shirred stick of the present invention provides protection against loss of filled product and ingress of air during packaging and eliminates the need for any dynamic seals or other arrangements to prevent escape of product to the outside.

## Claims

1. A method of packaging flowable material comprising placing around the filling means (1) of a filling apparatus a shirred stick (4) of tubular film casing material, said stick having a tubular bore there-through, said bore being lined with an integral unshirred extended end-length portion (4a) of the said casing material ; gathering and sealing the forward end of said shirred stick ; and feeding flowable material through said filling means (1) into said casing material whereby the shirred casing material is progressively deshirred and drawn from the shirred stick (4) ; characterised in that the leading end of said bore-lining unshirred casing portion (4a) is connected in leakproof manner in contact with and surrounding said filling means and the casing material is progressively drawn from the shirred stick over the point of leakproof connection of said bore-lining casing portion with said filling means.

2. A method as claimed in Claim 1 characterised in that the said leading end of the unshirred casing is connected to the filling means by means of a resilient O-shaped retaining ring (11).

3. A method as claimed in Claim 1 or Claim 2 characterised in that a drag component (12) is located in contact with the outside surface of a deshirred portion of the casing material whereby the density or firmness of the packaged material may be controlled.

4. A method as claimed in any one of Claims 1 to 3 inclusive characterised in that the extrudable material comprises foodstuff, explosive or caulking material.

5. A method of forming a shirred stick (4) of tubular film (20) said stick having a tubular bore therethrough, said bore being lined with an integral unshirred extended end-length portion (14a) of the tubular casing material, characterised in that one end of a length of tubular film (20) is secured to one end of a cylindrical former (22), said film (20) is sleeved externally over said former (22) and said film (20) is progressively shirred from the other end of said former (22) whereby a hollow shirred stick (25) of tubular film (20) is formed around an unshirred portion (24) of fim, which film portion lines the bore of said stick.

6. A method as claimed in Claim 5 characterised in that the former is a pipe (22), lay-flat tubular film (20) is secured to the end of said pipe by means of a perforated plug (23) inserted in the pipe end and compressed air is fed through said plug (23) into the lay-flat tubing to facilitate the sleeving and shirring operations.

**Ansprüche**

1. Verfahren zum Verpacken von fließfähigem Material, bei dem man um die Fülleinrichtung (1) einer Abfüllvorrichtung herum einen Hohlstab (4) aus einem in Falten gelegten, aus einer Schlauchfolie bestehenden Hüll-material anbringt, wobei sich durch den Hohlstab hin-durch eine rohrförmige Höhlung erstreckt, die mit einem ein Ganzes bildenden, nicht in Falten gelegten, langgestreckten Endabschnitt (4a) des Hüllmaterials ausgekleidet ist, das Vorderende des Hohlstabes zusammenrafft und verschließt und das fließfähige Material durch die Fülleinrichtung (1) hindurch in das Hüllmaterial einfüllt, wobei das in Falten gelegte Hüllmaterial fortschreitend entfaltet un von dem Hohlstab (4) abgezogen wird, dadurch gekennzeichnet, daß das Vorderende des nicht in Falten gelegten, die Höhlung auskleidenden Endabschnitts (4a) lecksicher mit der Fülleinrichtung verbunden ist, wobei es mit der Fülleinrichtung in Berührung ist und diese umgibt, und daß das Hüllmaterial fortschreitend über die Stelle der lecksicheren Verbindung des die Höhlung auskleidenden Endabschnitts mit der Fülleinrichtung von dem Hohlstab abgezogen wird.

2. Verfahren nach Anspruch 1, dadurch gekennzeichnet, daß das Vorderende des nicht in Falten gelegten Endabschnitts des Hüllmaterials mittels eines elastischen, O-förmigen Halteringes (11) mit der Fülleinrichtung verbunden ist.

3. Verfahren nach Anspruch 1 oder 2, dadurch gekennzeichnet, daß eine Hemmeinrichtung (12) so angeordnet wird, daß sie mit der äußeren Oberfläche eines entfalteten Abschnitts des Hüllmaterials in Berührung kommt, wodurch die Dichte oder die Festigkeit des verpackten Materials reguliert werden kann.

4. Verfahren nach einem der Ansprüche 1 bis 3, dadurch gekennzeichnet, daß als fließfähiges bzw. verpreßbares Material ein Nahrungsmittel, ein Sprengstoff oder ein Dichtungsmaterial eingesetzt wird.

5. Verfahren zur Bildung eines Hohlstabes (4), der ein in Falten gelegtes, schlauchförmiges Hüllmaterial enthält und durch den hindurch sich eine rohrförmige Höhlung erstreckt, die mit einem ein Ganzes bildenden, nicht in Falten gelegten, langgestreckten Endabschnitt (4a) des schlauchförmigen Hüllmaterials ausgekleidet ist, aus einer Schlauchfolie (20), dadurch gekennzeichnet, daß man ein Ende eines Stückes einer Schlauchfolie (20) an einem Ende einer zylindrischen Formungseinrichtung (22) befestigt, die Schlauchfolie (20) hülsenartig außen über die Formungseinrichtung (22) streift und die Schlauchfolie von dem anderen Ende der Formungseinrichtung (22) ausgehend fortschreitend in Falten legt, wodurch um einen nicht in Falten gelegten Abschnitt (24) der Schlauchfolie herum ein Hohlstab (25) aus der in Falten gelegten Schlauchfolie (20), dessen Höhlung mit dem nicht in Falten gelegten Abschnitt (24) ausgekleidet ist, gebildet wird.

6. Verfahren nach Anspruch 5, dadurch gekennzeichnet, daß man als Formungseinrichtung ein Rohr (22) einsetzt, daß man an dem Ende des Rohres mittels eines in das Rohrende hineingesteckten, gelochten Stopfens (23) eine flachliegende Schlauchfolie (20) befestigt und daß man zur Erleichterung der Arbeitsvorgänge, bei denen die Schlauchfolie übergestreift und in Falten gelegt wird, Preßluft durch den Stopfen (23) hindurch in die flachliegende Schlauchfolie einführt.

**Revendications**

1. Procédé de mise en boyau d'une matière pouvant s'écouler, suivant lequel on place autour du dispositif de remplissage (1) d'un poussoir de remplissage, un bâton (4) plissé en accordéon de matière de boyau pelliculaire, ce bâton présentant un alésage tubulaire qui le traverse de part en part et qui est tapissé ou doublé d'une longue partie d'extrémité non plissée (4a) de la matière de boyau qui fait corps avec celle-ci, on fronce et on scelle l'extrémité antérieure du bâton plissé en accordéon, et on débite la matière pouvant s'écouler par le dispositif de remplissage (1) dans la matière de boyau de telle sorte que la matière de boyau plissée en accordéon soit progressivement déplissée et tirée à partir du bâton plissé en accordéon (4), caractérisé en ce qu'on attache l'extrémité antérieure de la partie de boyau non plissée (4a) qui tapisse l'alésage d'une manière étanche, en contact avec le dispositif de remplissage et autour de celui-ci et on tire la matière de boyau progressivement à partir du bâton plissé en accordéon par-dessus le point d'attache étanche de la partie du boyau tapissant l'alésage au dispositif de remplissage.

2. Procédé suivant la revendication 1, caractérisé en ce que l'extrémité antérieure du boyau non plissé est attachée au dispositif de remplissage au moyen d'un anneau de retenue torique élastique (11).

3. Procédé suivant la revendication 1 ou 2, caractérisé en ce qu'un élément de raclage (12) est placé en contact avec la surface extérieure d'une partie déplissée de la matière de boyau, de sorte que la densité ou la fermeté de la matière mise en boyau peut être réglée.

4. Procédé suivant l'une quelconque des revendications 1 à 3, caractérisé en ce que la matière pouvant être extrudée est une matière alimentaire, un explosif ou une matière de calfatage.

5. Procédé pour former un bâton plissé en accordéon (4) de pellicule tubulaire (20) traversé de part en part par un alésage tubulaire qui est tapissé ou doublé d'une longue partie d'extrémité non plissée (4a) de la matière de boyau tubulaire faisant corps avec celle-ci, caractérisé en ce que l'extrémité d'une longueur de pellicule tubulaire (20) est fixée à une extrémité d'un mandrin cylindrique (22), la pellicule (20) est glissée extérieurement sur le mandrin (22) et elle est progressivement plissée en accordéon à partir de l'autre extrémité du mandrin (22) de telle sorte qu'un bâton plissé en accordéon creux (25) de pellicule tubulaire (20) soit formé autour d'une partie non plissée (24) de pellicule qui tapisse l'alésage du bâton.

6. Procédé suivant la revendication 5, caractérisé en ce que le mandrin est un tube (22), la pellicule tubulaire (20) à plat est fixée à l'extrémité du tube au moyen d'un bouchon perforé (23) enfoncé dans l'extrémité du tube et de l'air comprimé est introduit à travers le bouchon (23) dans le tube à plat pour faciliter les opérations de gainage et de plissage en accordéon.

Fig. 1

Fig. 2

Fig. 3

Fig. 4a

Fig. 4b

Fig. 4c

Fig. 4d